(19) Europäisches Patentamt
European Patent Office
Office européen des brevets

(11) EP 0 736 559 B1

(12) **FASCICULE DE BREVET EUROPEEN**

(45) Date de publication et mention de la délivrance du brevet:
**04.08.1999 Bulletin 1999/31**

(51) Int. Cl.[6]: **C08G 63/82**

(21) Numéro de dépôt: **96200803.3**

(22) Date de dépôt: **25.03.1996**

(54) **Procédé perfectionné pour la fabrication en continu de poly-epsilon-caprolactones**

Verbessertes Verfahren zur kontinuierlichen Herstellung von Poly-Epsilon-Caprolactonen

Improved process for the continuous preparation of poly-epsilon caprolactones

(84) Etats contractants désignés:
**AT BE DE ES FR GB IT NL**

(30) Priorité: **07.04.1995 BE 9500324**

(43) Date de publication de la demande:
**09.10.1996 Bulletin 1996/41**

(73) Titulaire:
**SOLVAY (Société Anonyme)**
**1050 Bruxelles (BE)**

(72) Inventeurs:
- **Wautier, Henri**
**7090 Braine-Le-Comte (BE)**
- **Detournay, Lucienne**
**1200 Bruxelles (BE)**
- **Kaszacs, Martine**
**1420 Braine-L'Alleud (BE)**

(74) Mandataire: **Eischen, Roland et al**
**Solvay & Cie**
**Département de la Propriété Industrielle**
**Rue de Ransbeek 310**
**1120 Bruxelles (BE)**

(56) Documents cités:
**EP-A- 0 626 405** **BE-A- 1 001 149**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 736 559 B1

## Description

La présente invention concerne un procédé perfectionné pour la fabrication en continu de poly-ε-caprolactones. Elle concerne plus particulièrement un procédé pour la polymérisation continue d'ε-caprolactone en masse fondue dans une extrudeuse (c'est-à-dire par extrusion réactive d'ε-caprolactone).

Dans la demande de brevet EP-A- 0 626 405 au nom de SOLVAY, on divulgue un procédé pour la fabrication de poly-ε-caprolactones par polymérisation continue d'ε-caprolactone en masse fondue dans une extrudeuse à l'intervention d'alkoxydes d'aluminium choisis, de préférence, parmi les trialkoxydes d'aluminium de formule générale $Al(OR)_3$ dans laquelle R représente un radical alkyle linéaire ou ramifié contenant de 2 à 6 atomes de carbone tels que et de préférence le tri-isopropoxyde d'aluminium et le tri-sec butoxyde d'aluminium. Les trialkoxydes d'aluminium décrits dans l'art antérieur permettent la fabrication à façon de poly-ε-caprolactones de masses moléculaires variables, y compris de masses moléculaires très élevées, et approximativement préétablies en adaptant les débits d'alimentation de l'extrudeuse en ε-caprolactone et en amorceur. Toutefois, bon nombre des alkoxydes préférés de l'art antérieur se présentent à l'état de solide ou de liquide très visqueux à température ambiante, de sorte qu'ils doivent être dilués pour permettre leur mise en oeuvre. C'est notamment le cas du tri-isopropoxyde et du tri-sec butoxyde d'aluminium.

La dilution des amorceurs dans un solvant organique tel que l'heptane, suivie éventuellement d'une filtration, permet d'obtenir une solution facile à mettre en oeuvre. Diluer l'amorceur est également nécessaire pour obtenir une meilleure précision dans son dosage en vue de la fabrication de poly-ε-caprolactones de masses moléculaires préétablies. Cette dilution présente toutefois de nombreux inconvénients. Ainsi, il s'est maintenant avéré indispensable de soumettre l'amorceur dissous dans le solvant et l'ε-caprolactone à un prémélange intense sous agitation vigoureuse en vue de garantir la dispersion rapide et uniforme de l'amorceur dans le monomère indispensable à une polymérisation homogène. Or, les équipements conventionnels des extrudeuses ne peuvent assurer un tel prémélange uniquement par le profil de vis. Ni un profil de vis particulièrement malaxant, ni des éléments de malaxage en début de vis ne permettent de résoudre ce problème, ce qui implique donc que l'on ait recours à un mélangeur indépendant (par exemple, un mélangeur statique). Même dans ce cas, des difficultés sont rencontrées à cause de l'obstruction des conduites par polymérisation précoce puisque le monomère et l'amorceur y sont déjà présents dans les proportions correspondant au polymère final.

La dilution de l'amorceur par un solvant présente d'autres inconvénients pour la polymérisation continue de l'ε-caprolactone en extrudeuse. En effet, l'extrudeuse doit obligatoirement être pourvue d'un évent de dégazage pour éliminer le solvant dont il faut par ailleurs assurer le recyclage ou la destruction. De plus, les solvants utilisés sont le plus souvent inflammables et nécessitent des précautions supplémentaires anti-déflagration.

La présente invention a pour but de procurer un procédé pour la polymérisation continue d'ε-caprolactone en masse fondue dans une extrudeuse qui ne présente plus les inconvénients précités.

A cet effet, l'invention concerne un procédé pour la fabrication en continu de poly-ε-caprolactones par polymérisation continue d'ε-caprolactone en masse fondue dans une extrudeuse à l'intervention d'alkoxydes d'aluminium comme amorceurs de polymérisation, caractérisé en ce que l'alkoxyde d'aluminium est choisi parmi les trialkoxydes d'aluminium dont au moins un radical alkoxy comprend outre l'atome d'oxygène constitutif du lien aluminoxane (Al-O-) au moins un autre atome d'oxygène.

Par extrudeuse, on entend désigner aux fins de la présente invention tout dispositif continu comprenant une zone d'alimentation et une zone d'évacuation au travers duquel la matière en fusion est forcée à passer avec des temps de séjour moyen ne dépassant pas environ 15 minutes. Les extrudeuses telles que définies doivent être aptes à accomplir les fonctions suivantes : mélange des matières introduites, en l'occurence du monomère et de l'amorceur de polymérisation, transport des matières du point d'alimentation à une filière et élimination de la chaleur de réaction. Avantageusement il sera fait appel à des extrudeuses connues basées sur le travail de deux vis, qu'elles soient co- ou contrarotatives.

Par polymérisation en masse fondue, on entend désigner la polymérisation en l'absence substantielle de solvant ou de diluant à une température au moins égale à la température de fusion des poly-ε-caprolactones produites.

Par poly-ε-caprolactones, on entend désigner aussi bien les homopolymères de l'ε-caprolactone que les copolymères avec d'autres lactones, telles que la β-propiolactone ou la δ-valérolactone, à teneur prépondérante en ε-caprolactone. Le procédé selon l'invention s'applique donc aussi bien à l'homopolymérisation qu'à la copolymérisation de l'ε-caprolactone avec d'autres lactones. Néanmoins, il convient tout particulièrement pour la fabrication de poly-ε-caprolactones homopolymères.

La demanderesse a constaté que les trialkoxydes d'aluminium dont au moins un radical alkoxy contient outre l'atome d'oxygène constitutif de lien aluminoxane (Al-O) au moins un autre atome d'oxygène se présentent généralement à l'état de liquide à température ambiante et sont par ailleurs miscibles avec l'ε-caprolactone (c'est-à-dire forment une phase unique avec l'ε-caprolactone lorsqu'elles y sont mélangées dans les proportions requises pour amorcer la polymérisation). Les amorceurs de polymérisation de l'ε-caprolactone selon la présente invention peuvent dès lors être dispersés dans l'ε-caprolactone en l'absence de solvant même dans des conditions de prémélange peu intenses. Ils

procurent des poly-ε-caprolactones d'aspect homogène et exemptes d'agrégats de polymère dans le monomère non polymérisé. En outre, les amorceurs de polymérisation selon la présente invention présentent tous les avantages décrits en rapport avec les trialkoxydes d'aluminium de l'art antérieur, tels qu'une activité très élevée, l'absence d'effet significatif de la température de polymérisation sur les masses moléculaires des poly-ε-caprolactones produites et l'obtention de poly-ε-caprolactones présentant un rapport entre la masse moléculaire moyenne en poids ($M_w$) et la masse moléculaire moyenne en nombre ($M_n$) au moins égal à 2 et le plus souvent au moins égal à 2,2 (lesdites masses moléculaires étant mesurées par chromatographie par perméation de gel dans le tétrahydrofuranne à 25°C).

En principe tous les trialkoxydes d'aluminium dont au moins un radical alkoxy comprend au moins un atome d'oxygène supplémentaire (en sus de l'atome d'oxygène du lien aluminoxane (Al-O)) conviennent comme amorceurs de polymérisation dans le cadre de la présente invention. Avantageusement, cet atome d'oxygène supplémentaire est présent sous la forme d'une fonction ester ou d'une fonction éther.

Des exemples de trialkoxydes d'aluminium selon l'invention dont au moins un des radicaux alkoxy comporte un atome d'oxygène supplémentaire présent sous la forme d'une fonction ester répondent à la formule générale statistique (I) ci-dessous :

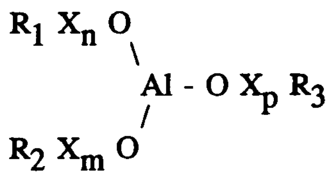

(I)

dans laquelle :

X représente un radical dérivé de l'ε-caprolactone de formule

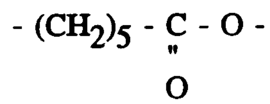

n, m et p représentent indépendemment l'un de l'autre des nombres entiers de 0 à 12 dont la somme vaut au moins 1 et ne dépasse pas 12

$R_1$, $R_2$ et $R_3$ représentent indépendemment l'un de l'autre un radical alkyle linéaire ou ramifié contenant de 1 à 10 atomes de carbone.

De préférence, la somme des nombres n, m et p vaut de 3 à 10 et plus particulièrement encore de 6 à 9 .

De préférence, les radicaux R1, R2 et R3 sont identiques et représentent un radical alkyle, linéaire ou ramifié, contenant de 2 à 8 atomes de carbone et plus particulièrement encore de 2 à 6 atomes de carbone. Des radicaux de ce type qui sont particulièrement préférés sont les radicaux éthyle, propyle, isopropyle, butyle et sec-butyle. A titre d'exemple de trialkoxyde d'aluminium de ce type tout particulièrement préféré, on peut citer par exemple le trialkoxyde(I) dans lequel la somme de n, m et p vaut 8 et $R_1$, $R_2$ et $R_3$ représentent le radical sec-butyle.

Des exemples de trialkoxydes d'aluminium selon l'invention dont au moins un des radicaux alkoxy comporte un atome d'oxygène supplémentaire présent sous la forme d'une fonction éther répondent à la formule générale statistique (II) ci-dessous :

$$(R_4\text{-}O)_{3-n}\text{-}Al\text{-}(0\text{-}\ R_5\text{-}O\text{-}\ R_6)_n \qquad \text{(II)}$$

dans laquelle :

n représente un nombre de 1 à 3,

$R_4$ représente un radical alkyle, linéaire ou ramifié, contenant de 1 à 10 atomes de carbone,

$R_5$ représente un radical alkylène, linéaire ou ramifié, contenant de 1 à 10 atomes de carbone,

$R_6$ représente un radical alkyle ou aryle contenant de 1 à 6 atomes de carbone.

De préférence, le radical alkyle $R_4$ et le radical alkylène $R_5$ contiennent indépendemment l'un de l'autre de 2 à 8 atomes de carbone et plus particulièrement encore de 2 à 6 atomes de carbone. Par ailleurs, $R_6$ représente de pré-

férence un radical alkyle contenant de 1 à 4 atomes de carbone et plus particulièrement encore de 1 à 3 atomes de carbone.

Des trialkoxydes de type (II) qui sont particulièrement préférés sont par ailleurs ceux de formule générale statistique (II) dans laquelle n représente 3, c'est-à-dire les tri-alkoxyalkyloxydes d'aluminium. A titre d'exemple d'un trialkoxyde de ce type tout particulièrement préféré, on peut mentionner par exemple le tri(méthoxyéthoxy) aluminium.

Le mode de fabrication des amorceurs de polymérisation de formule générale statistique (I) et (II) n'est pas critique. Ils peuvent dès lors être fabriqués par tout procédé connu pour la fabrication d'alkoxydes d'aluminium. C'est ainsi par exemple que les trialkoxydes de type (I) contenant une fonction ester peuvent avantageusement être fabriqués en faisant réagir de l'ε-caprolactone avec un alkoxyde d'aluminium de formule

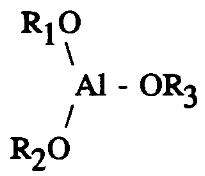

(appelé ci-après alcoolate d'aluminium)
dans laquelle $R_1$, $R_2$ et $R_3$ ont la signification indiquée plus haut, dans un rapport molaire ε-caprolactone /Al contenu dans l'alcoolate d'aluminium équivalent à la somme de n, m et p dans la formule (I).
Dans cette préparation, l'ε-caprolactone exerce également le rôle de diluant de l'alcoolate d'aluminium et la synthèse de l'amorceur peut donc se faire sans addition de diluant hydrocarboné.

Les amorceurs de polymérisation de type (II) peuvent par exemple être préparés par :

- réaction d'un trialkylaluminium avec 3 moles d'alkoxyalccol. Ainsi, pour produire le tri(méthoxyéthoxy) aluminium, on fait réagir une mole de trialkylaluminium, tel que le triéthylaluminium, avec 3 moles de méthoxyéthanol ou encore et de préférence
- reaction d'un trialkoxyde d'aluminium avec 1 à 3 moles d'un alkoxyalcool dans des conditions qui conduisent à une substitution des groupements alkoxy par des groupements alkoxyalkoxy. Ainsi on peut produire le tri(méthoxyéthoxy)aluminium en faisant réagir une mole de tri-sec-butoxyde d'aluminium avec 3 moles de 2-méthoxyéthanol.

Les amorceurs de polymérisation de type (I) et (II) présentent l'avantage de pouvoir être mis en oeuvre sans solvant et de se disperser rapidement et de façon homogène dans l'ε-caprolactone, même pour des vitesses d'extrusion lentes. Les rendements sont excellents et la non-utilisation de solvant se traduit par une technologie simplifiée produisant des poly-ε-caprolactones ne nécessitant aucune purification ultérieure.

Les amorceurs de type (II) sont en général beaucoup moins visqueux que les amorceurs de type (I), ce qui rend leur manipulation via des pompes plus aisée et rend superflu tout préchauffage de l'amorceur avant mélange et mise en réaction avec l'ε-caprolactone.

Les trialkoxydes d'aluminium dont au moins un radical alkoxy contient une fonction éther (II) sont dès lors les amorceurs auxquels on donne tout particulièrement la préférence.

Suivant un mode de réalisation particulier et avantageux du procédé de la présente invention, on met en oeuvre comme amorceur de polymérisation un trialkoxyde d'aluminium en présence d'un alcool. Il a été constaté que les alcools introduits en sus des trialkoxydes à l'extrusion réactive de l'ε-caprolactone agissent comme agents de transfert de chaînes. Le mise en oeuvre supplémentaire d'alcools permet de produire des poly-ε-caprolactones de masses moléculaires élevées en mettant en oeuvre de plus faibles quantités de trialkoxyde d'aluminium et, dès lors, de réduire les résidus catalytiques dans les poly-ε-caprolactones produites.

Avantageusement, les alcools mis en oeuvre en sus des trialkoxydes selon l'invention sont des alcools aliphatiques, linéaires ou ramifiés, contenant de 1 à 10 atomes de carbone et, de préférence, de 2 à 6 atomes de carbone. Ces alcools peuvent comprendre des fonctions éthers et englobent donc les alkoxyalcools aliphatiques, linéaires ou ramifiés, contenant de 1 à 10 atomes de carbone et, de préférence de 2 à 6 atomes de carbone. Généralement, l'alcool est mis en oeuvre en une quantité qui ne dépasse pas 10 moles par mole de trialkoxyde d'aluminium. Le plus souvent, cette quantité ne dépasse pas 6 moles par mole de trialkoxyde d'aluminium. De préférence, la quantité d'alcool mise en oeuvre ne dépasse pas 3 moles par mole de trialkoxyde d'aluminium. Par ailleurs, les alcools peuvent être mis en oeuvre séparément ou en mélange avec le trialkoxyde d'aluminium ou encore avec l'ε-caprolactone. Avantageusement, ils sont mis en oeuvre en mélange avec le trialkoxyde d'aluminium.

La quantité d'amorceur de polymérisation à mettre en oeuvre à la polymérisation de l'ε-caprolactone peut varier dans des limites assez larges et dépend essentiellement des masses moléculaires moyennes en poids ($M_w$) visées pour les poly-ε-caprolactones. Il a en effet été constaté qu'il existe une relation pratiquement linéaire, indépendante de la température de polymérisation, entre le rapport des débits d'alimentation de l'extrudeuse en lactone et en amorceur de polymérisation, d'une part, et la masse moléculaire moyenne en poids ($M_w$) de la poly-ε-caprolactone produite, d'autre part.

Le procédé selon l'invention permet dès lors la fabrication en continu de poly-ε-caprolactones de masses moléculaires moyennes en poids ($M_w$) approximatives pré-établies par réglage des débits d'alimentation de l'extrudeuse en lactone et en amorceur de polymérisation en conformité avec l'équation suivante :

$$M_w = \frac{2{,}25}{3+a} \times \frac{\text{débit d'alimentation en lactone (en g/min)}}{\text{débit d'alimentation en amorceur (en moles d'Al/min)}}$$

dans laquelle a représente le nombre de moles d'alcool mis en oeuvre par mole d'aluminium.

Dans cette équation, a représente donc un nombre ne dépassant généralement pas 10, le plus souvent pas 6 et, de préférence, pas 3. Il est entendu que a est égal à zéro lorsque la polymérisation s'effectue en l'absence d'alcool.

Le procédé selon l'invention convient tout particulièrement pour la fabrication de poly-ε-caprolactones de masses moléculaires en poids tellement élevées qu'il est malaisé de les isoler des réacteurs en fin de cycle dans la polymérisation en discontinu. C'est pourquoi, il s'applique de préférence à la fabrication de poly-ε-caprolactones ayant des masses moléculaires moyennes en poids au moins égales à 75 000 g/mole environ. Idéalement tous les réactifs mis en oeuvre dans le procédé de polymérisation selon l'invention doivent être anhydres. Néanmoins, des teneurs résiduelles en eau ne dépassant pas 100 mg/kg de lactone et plus particulièrement encore ne dépassant pas 50 mg/kg de lactone pourront être tolérées, car elles n'ont pas d'influence significative sur la masse moléculaire moyenne en poids des poly-ε-caprolactones produites selon le procédé de l'invention.

L'absence d'effet significatif de la température de polymérisation (c'est-à-dire de la température de la matière dans l'extrudeuse) sur les masses moléculaires des poly-ε-caprolactones produites présente par ailleurs l'avantage que des écarts de température entre les différentes zones de l'extrudeuse n'ont pas d'effet significatif sur les masses moléculaires des poly-ε-caprolactones produites. De fait, la température de polymérisation influe essentiellement sur la vitesse de polymérisation. Dans le procédé selon l'invention la température dans l'extrudeuse peut donc sans inconvénient fluctuer dans une assez large mesure, pourvu qu'elle soit au moins égale à la température de fusion des poly-ε-caprolactones produites. Pour fixer les idées, la température minimale pour l'homopolymérisation de l'ε-caprolactone se situera à 60 °C. Des températures plus élevées permettent d'accélérer la vitesse de polymérisation. Néanmoins, en pratique on ne dépassera généralement pas 200 °C et, de préférence pas environ 185 °C, de manière à éviter tout risque de dégradation des poly-ε-caprolactones produites.

Par ailleurs, on choisira la température de polymérisation de manière à atteindre des taux de conversion et des rendements proches de 100 % pour des temps de séjour moyens de la masse réactionnelle dans l'extrudeuse ne dépassant pas environ 15 minutes. Ces temps de séjour moyens dépendent bien entendu de la configuration de l'extrudeuse et, le cas échéant, de la vitesse de rotation des vis.

D'excellents résultats ont été obtenus par polymérisation continue d'ε-caprolactone en masse fondue à une température comprise entre 110 et 170 °C environ avec des temps de séjour moyens dans l'extrudeuse ne dépassant généralement pas environ 10 minutes et, plus particulièrement encore ne dépassant pas 5 minutes. Dans tous les cas, des taux de conversion et des rendements largement supérieurs à 95 % ont été obtenus. A la sortie des extrudeuse, les joncs extrudés de poly-ε-caprolactones seront refroidis avant d'être granulés suivant les techniques bien connues de l'homme du métier.

Les exemples qui suivent sont destinés à illustrer l'invention.

Dans l'exemple 1, on a mis en oeuvre un amorceur de polymérisation du type des trialkoxydes d'aluminium comprenant une fonction ester de formule générale statistique (I) dans laquelle la somme de n, m et p vaut 8 et $R_1$, $R_2$ et $R_3$ représentent tous trois un radical sec-butyle.

Cet amorceur qui a été préparé en ajoutant à 25°C de l'ε-caprolactone sur du tri-sec butoxyde d'aluminium dans un rapport molaire de 8:1 contient 0,86 mole d'aluminium par kg.

Dans l'exemple 2, on a mis en oeuvre un amorceur de polymérisation du type des trialkoxydes d'aluminium comprenant une fonction éther de formule générale statistique (II) dans laquelle n vaut 3, $R_5$ représente un radical éthylène et $R_6$ représente un radical méthyle en mélange avec du sec-butanol dans le rapport molaire trialkoxyde : alcool de 1:3. Cet amorceur qui a été préparé par réaction à 25 °C de méthoxyéthanol avec du tri-sec butoxyde d'aluminium dans un rapport molaire de 3:1 sans séparer le sec-butanol produit contient 2,1 moles d'aluminium par kg.

L'exemple 1 a été réalisé dans une extrudeuse à deux vis corotatives (de type ZR 80). L'exemple 2 a été réalisé dans une extrudeuse à deux vis contrarotatives (de type CINCINNATI MILACRON). Outre les deux vis de transport, ces extrudeuses sont pourvues pour l'essentiel d'une pompe à engrenage située en bout d'extrudeuse destinée à pousser le polymère en fusion à travers une filière, d'une double enveloppe pour la circulation d'un fluide caloporteur et

d'un capteur de température situé avant la pompe.

Exemple 1

L'extrudeuse à double vis corotatives est alimentée à température ambiante avec de l'ε-caprolactone à un débit constant fixé à 11 kg/h. L'amorceur préchauffé à 80°C est introduit à approximativement 100 mm du début de la vis à un débit de 65 g/h ou 0,056 mole d'aluminium/h, de sorte que la masse moléculaire moyenne en poids théorique, calculée suivant l'équation détaillée plus haut, vaut approximativement 147 000 g/mole.

L'extrudeuse est refroidie par circulation d'huile dans la double enveloppe maintenue à une température d'entrée de 130 °C et la vitesse de rotation des vis est maintenue constante et égale à 15 t/min.

La température de la poly-ε-caprolactone mesurée à la sortie de la vis (température de polymérisation) s'élève à 160 °C. Le temps de séjour moyen des matières dans l'extrudeuse est estimé à environ 2 minutes.

A la sortie de la filière, la poly-ε-caprolactone présente un aspect homogéne. Elle est refroidie et granulée. Les masses moléculaires moyennes en poids ($M_w$) et en nombre ($M_n$) sont évaluées par chromatographie par perméation de gel (GPC) dans le tétrahydrofuranne à 25°C.

- $M_w$ (mesurée) : 144 000 g/mole
- $M_w$ (calculée) : 147 000 g/mole
- $M_w/M_n$ : 2,3

Exemple 2

L'extrudeuse à double vis contra-rotatives est alimentée à température ambiante avec de l'ε-caprolactone à un débit constant fixé à 72,6 kg/h et par ailleurs avec l'amorceur de polymérisation à un débit constant fixé à 152g/h ou 0,32 mole d'aluminium/h en vue de produire de la poly-ε-caprolactone présentant une masse moléculaire moyenne en poids $M_w$ théorique calculée suivant l'équation détaillée plus haut d'environ 85 000 g/mole (à souligner que, dans ce cas, a vaut 3).

L'extrudeuse est refroidie par circulation d'huile dans la double enveloppe maintenue à une température d'entrée de 150°C et la vitesse de rotation des vis est maintenue constante et égale à 25 t/min.

La température de la poly-ε-caprolactone mesurée à la sortie de la vis (température de polymérisation) s'élève à 160°C. Le temps de séjour moyen des matières dans l'extrudeuse est estimé à environ 70 sec.

A la sortie de la filière, la poly-ε-caprolactone est refroidie et granulée. Les masses moléculaires moyennes en poids ($M_w$) et en nombre ($M_n$) sont évaluées par chromatographie par perméation de gel (GPC) dans le tétrahydrofuranne à 25°C.

- $M_w$ (mesurée) : 82 000 g/mole
- $M_w$ (calculée) : 85 000 g/mole
- $M_w/M_n$ : 2,4

## Revendications

1. Procédé pour la fabrication en continu de poly-ε-caprolactones par polymérisation continue d'ε-caprolactone en masse fondue dans une extrudeuse à l'intervention d'alkoxydes d'aluminium comme amorceurs de polymérisation, caractérisé en ce que l'alkoxyde d'aluminium est choisi parmi les trialkoxydes d'aluminium dont au moins un radical alkoxy comprend outre l'atome d'oxygène constitutif du lien aluminoxane (Al-O) au moins un autre atome d'oxygène.

2. Procédé pour la fabrication en continu de poly-ε-caprolactones suivant la revendication 1, caractérisé en ce que l'autre atome d'oxygène est présent sous la forme d'une fonction ester ou éther.

3. Procédé pour la fabrication en continu de poly-ε-capralactones suivant la revendication 1 ou 2, caractérisé en ce que les trialkoxydes d'aluminium comprenant une fonction ester répondent à la formule générale statistique :

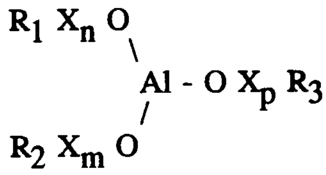

(I)

dans laquelle :

X représente un radical dérivé de l'ε-caprolactone de formule

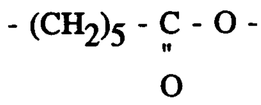

n, m et p représentent indépendemment l'un de l'autre des nombres entiers de 0 à 12 dont la somme vaut au moins 1 et ne dépasse pas 12
$R_1$, $R_2$ et $R_3$ représentent indépendemment l'un de l'autre un radical alkyle linéaire ou ramifié contenant de 1 à 10 atomes de carbone.

**4.** Procédé pour la fabrication en continu de poly-ε-caprolactones suivant la revendication 3, caractérisé en ce que la somme de n, m, et p vaut de 3 à 10 et en ce que $R_1$, $R_2$ et $R_3$ sont identiques et représentent un radical alkyle, linéaire ou ramifié, contenant de 2 à 8 atomes de carbone.

**5.** Procédé pour la fabrication en continu de poly-ε-caprolactones suivant la revendication 1 ou 2, caractérisé en ce que les trialkoxydes d'aluminium comprenant une fonction ether répondent à la formule générale statistique :

$$(R_4\text{-}O)_{3-n}\text{-}Al\text{-}(0\text{-} R_5\text{-}O\text{-} R_6)_n$$

dans laquelle :

n représente un nombre de 1 à 3,
$R_4$ représente un radical alkyle, linéaire ou ramifié, contenant de 1 à 10 atomes de carbone,
$R_5$ représente un radical alkylène, linéaire ou ramifié, contenant de 1 à 10 atomes de carbone,
$R_6$ représente un radical alkyle ou aryle contenant de 1 à 6 atomes de carbone.

**6.** Procédé pour la fabrication en continu de poly-ε-caprolactones suivant la revendication 5, caractérisé en ce que le radical alkyle $R_4$ et le radical alkylène $R_5$ contiennent indépendamment l'un de l'autre de 2 à 8 atomes de carbone et en ce que $R_6$ représente un radical alkyle contenant de 1 à 4 atomes de carbone.

**7.** Procédé pour la fabrication en continu de poly-ε-caprolactones suivant la revendication 5 ou 6, caractérisé en ce que n représente 3.

**8.** Procédé pour la fabrication en continu de poly-ε-caprolactones suivant l'une quelconque des revendications 1 à 7, caractérisé en ce qu'on met en oeuvre comme amorceur de polymérisation un trialkoxyde d'aluminium en présence d'un alcool aliphatique, linéaire ou ramifié, contenant de 1 à 10 atomes de carbone en une quantité qui ne dépasse pas 10 modes par mode de trialkoxyde d'aluminium.

**9.** Procédé pour la fabrication en continu de pody-ε-caprolactones ayant une masse moléculaire moyenne en poids $M_w$ approximative préétablie par polymérisation continue d'ε-caprolactone en masse fondue dans une extrudeuse selon l'une quelconque des revendications 1 à 8, caractérisé en ce qu'on règle les débits d'alimentation de d'extrudeuse en lactone et en amorceur de polymérisation en conformité avec l'équation suivante :

$$M_w = \frac{2{,}25}{3 + a} \times \frac{\text{débit d'alimentation en lactone (en g/min)}}{\text{débit d'alimentation en amorceur (en moles d'Al/min)}}$$

dans laquelle a représente le nombre de modes d'alcool par mode d'aluminium.

**10.** Procédé pour la fabrication de poly-ε-caprolactones suivant l'une quelconque des revendications 1 à 9, caractérisé en ce qu'il est appliqué à d'homopolymérisation de l'ε-caprolactone.

## Claims

**1.** Process for the continuous manufacture of poly-ε-caprolactones by continuous polymerization of ε-caprolactone as a melt in an extruder with the use of aluminium alkoxides as polymerization initiators, characterized in that the aluminium alkoxide is chosen from aluminium trialkoxides in which at least one alkoxy radical includes at least one other oxygen atom besides the oxygen atom constituting the aluminoxane (Al-O) bond.

**2.** Process for the continuous manufacture of poly-ε-caprolactones in accordance with Claim 1, characterized in that the other oxygen atom is present in the form of an ester or ether functional group.

**3.** Process for the continuous manufacture of poly-ε-caprolactones in accordance with Claim 1 or 2, characterized in that the aluminium trialkoxides including an ester functional group correspond to the statistical general formula:

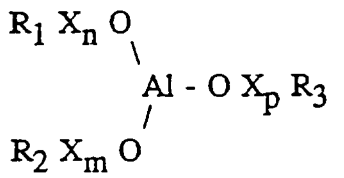

(I)

in which:

X denotes a radical derived from ε-caprolactone, of formula

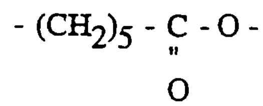

n, m and p denote, independently of each other, integers from 0 to 12, the sum of which is at least 1 and does not exceed 12,
$R_1$, $R_2$ and $R_3$ denote, independently of each other, a linear or branched alkyl radical containing from 1 to 10 carbon atoms.

**4.** Process for the continuous manufacture of poly-ε-caprolactones in accordance with Claim 3, characterized in that the sum of n, m and p is from 3 to 10 and in that $R_1$, $R_2$ and $R_3$ are identical and denote a linear or branched alkyl radical containing from 2 to 8 carbon atoms.

**5.** Process for the continuous manufacture of poly-ε-caprolactones in accordance with Claim 1 or 2, characterized in that the aluminium trialkoxides including an ether functional group correspond to the statistical general formula:

$$(R_4\text{-}O)_{3-n}\text{-}Al\text{-}(O\text{-}R_5\text{-}O\text{-}R_6)_n$$

in which:

n denotes a number from 1 to 3,
$R_4$ denotes a linear or branched alkyl radical containing from 1 to 10 carbon atoms,
$R_5$ denotes a linear or branched alkylene radical containing from 1 to 10 carbon atoms,
$R_6$ denotes an alkyl or aryl radical containing from 1 to 6 carbon atoms.

**6.** Process for the continuous manufacture of poly-ε-caprolactones in accordance with Claim 5, characterized in that

the alkyl radical $R_4$ and the alkylene radical $R_5$ contain, independently of each other, from 2 to 8 carbon atoms and in that $R_6$ denotes an alkyl radical containing from 1 to 4 carbon atoms.

**7.** Process for the continuous manufacture of poly-ε-caprolactones in accordance with Claim 5 or 6, characterized in that n denotes 3.

**8.** Process for the continuous manufacture of poly-ε-caprolactones in accordance with any one of Claims 1 to 7, characterized in that an aluminium trialkoxide is used as polymerization initiator in the presence of a linear or branched aliphatic alcohol containing from 1 to 10 carbon atoms, in a quantity which does not exceed 10 moles per mole of aluminium trialkoxide.

**9.** Process for the continuous manufacture of poly-ε-caprolactones which have an approximate weight-average molecular mass $M_w$ established beforehand, by continuous polymerization of ε-caprolactone as a melt in an extruder according to any one of Claims 1 to 8, characterized in that the feed flow rates of lactone and of polymerization initiator to the extruder are regulated in accordance with the following equation:

$$M_w = \frac{2.25}{3+a} \times \frac{\text{feed flow of lactone (in g/min)}}{\text{feed flow rate of initiator (in moles of Al/min)}}$$

in which a denotes the number of moles of alcohol used per mole of aluminium.

**10.** Process for the manufacture of poly-ε-caprolactones in accordance with any one of Claims 1 to 9, characterized in that it is applied to the homopolymerization of ε-caprolactone.

**Patentansprüche**

**1.** Verfahren zur kontinuierlichen Herstellung von Poly-ε-caprolactonen durch kontinuierliche Polymerisation von ε-Caprolacton in der Schmelze in einem Extruder unter Beteiligung von Aluminiumalkoxiden als Polymerisationsinitiatoren, dadurch gekennzeichnet, daß das Aluminiumalkoxid unter den Aluminiumtrialkoxiden ausgewählt ist, bei denen wenigstens ein Alkoxyrest außer dem Grundsauerstoffatom der Aluminoxanbindung (Al-O) wenigstens ein anderes Sauerstoffatom umfaßt.

**2.** Verfahren zur kontinuierlichen Herstellung von Poly-ε-caprolactonen gemäß Anspruch 1, dadurch gekennzeichnet, daß das andere Sauerstoffatom in Form einer Ester- oder Etherfunktion vorhanden ist.

**3.** Verfahren zur kontinuierlichen Herstellung von Poly-ε-caprolactonen gemäß Anspruch 1 oder 2, dadurch gekennzeichnet, daß die Aluminiumtrialkoxide, die eine Esterfunktion umfassen, der statistischen allgemeinen Formel:

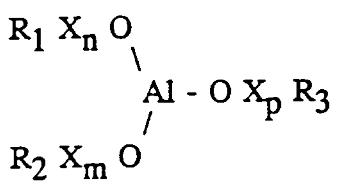

(I)

entsprechen, in der:

X einen Rest darstellt, der von dem ε-Caprolacton der Formel

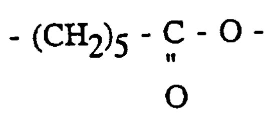

abgeleitet ist,
n, m und p unabhängig voneinander ganze Zahlen von 0 bis 12 darstellen, deren Summe wenigstens 1 ist und

12 nicht übersteigt,

$R_1$, $R_2$ und $R_3$ unabhängig voneinander einen linearen oder verzweigten Alkylrest, der 1 bis 10 Kohlenstoffatome enthält, darstellen.

**4.** Verfahren zur kontinuierlichen Herstellung von Poly-ε-caprolactonen gemäß Anspruch 3, dadurch gekennzeichnet, daß die Summe von n, m und p 3 bis 10 ist, und dadurch, daß $R_1$, $R_2$ und $R_3$ gleich sind und einen linearen oder verzweigten Alkylrest, der 2 bis 8 Kohlenstoffatome enthält, darstellen.

**5.** Verfahren zur kontinuierlichen Herstellung von Poly-ε-caprolactonen gemäß Anspruch 1 oder 2, dadurch gekennzeichnet, daß die Aluminiumtrialkoxide, die eine Etherfunktion umfassen, der statistischen allgemeinen Formel:

$$(R_4\text{-}O)_{3\text{-}n}\text{-}Al\text{-}(O\text{-}R_5\text{-}O\text{-}R_6)_n$$

entsprechen, in der:

n eine Zahl von 1 bis 3 darstellt,
$R_4$ einen linearen oder verzweigten Alkylrest, der 1 bis 10 Kohlenstoffatome enthält, darstellt,
$R_5$ einen linearen oder verzweigten Alkylenrest, der 1 bis 10 Kohlenstoffatome enthält, darstellt.
$R_6$ einen Alkyl- oder Arylrest, der 1 bis 6 Kohlenstoffatome enthält, darstellt.

**6.** Verfahren zur kontinuierlichen Herstellung von Poly-ε-caprolactonen gemäß Anspruch 5, dadurch gekennzeichnet, daß der Alkylrest $R_4$ und der Alkylenrest $R_5$ unabhängig voneinander 2 bis 8 Kohlenstoffatome enthalten, und dadurch, daß $R_6$ einen Alkylrest, der 1 bis 4 Kohlenstoffatome enthält, darstellt.

**7.** Verfahren zur kontinuierlichen Herstellung von Poly-ε-caprolactonen gemäß Anspruch 5 oder 6, dadurch gekennzeichnet, daß n 3 darstellt.

**8.** Verfahren zur kontinuierlichen Herstellung von Poly-ε-caprolactonen gemäß einem der Ansprüche 1 bis 7, dadurch gekennzeichnet, daß man als Polymerisationsinitiator ein Aluminiumtrialkoxid in Gegenwart eines aliphatischen, linearen oder verzweigten Alkohols, der 1 bis 10 Kohlenstoffatome enthält, in einer Menge, die 10 Mol pro Mol Aluminiumtrialkoxid nicht übersteigt, einsetzt.

**9.** Verfahren zur kontinuierlichen Herstellung von Poly-ε-caprolactonen mit einem vorher festgelegten ungefähren Gewichtsmittel der Molekülmasse $M_w$ durch kontinuierliche Polymerisation von ε-Caprolacton in der Schmelze in einem Extruder gemäß einem der Ansprüche 1 bis 8, dadurch gekennzeichnet, daß man die Einspeisungsdurchsätze des Extruders an Lacton und an Polymerisationsinitiator in Übereinstimmung mit der folgenden Gleichung:

$$M_w = \frac{2{,}25}{3+a} \times \frac{\text{Einspeisungsdurchsatz an Lacton (in g/min)}}{\text{Einspeisungsdurchsatz an Initiator (in Mole Al/min)}}$$

in der a die Anzahl an Molen Alkohol pro Mol Aluminium darstellt, einstellt.

**10.** Verfahren zur Herstellung von Poly-ε-caprolactonen gemäß einem der Ansprüche 1 bis 9, dadurch gekennzeichnet, daß es auf die Homopolymerisation von ε-Caprolacton angewendet wird.